# EUROPÄISCHE PATENTSCHRIFT

(11) **EP 3 635 236 B1**
(45) Veröffentlichungstag und Bekanntmachung des Hinweises auf die Patenterteilung: **02.06.2021**
(21) Anmeldenummer: 18731358.0
(22) Anmeldetag: 06.06.2018
(51) Int. Cl.: F02M 21/02

(54) **KRAFTSTOFFINJEKTOR**
FUEL INJECTOR
INJECTEUR DE CARBURANT

(30) Priorität: 08.06.2017 DE 102017005478
(43) Veröffentlichungstag der Anmeldung: 15.04.2020
(73) Patentinhaber: L'Orange GmbH, 70435 Stuttgart (DE)
(72) Erfinder: BERGER, Ingmar Joachim, 70374 Stuttgart (DE); BÄROW, Enrico, 70376 Stuttgart (DE); KOCH, Hans-Joachim, 72293 Glatten (DE); NITSCHE, Michael, 71701 Schwieberdingen (DE)
(74) Vertreter: Fish & Richardson P.C.
(86) Internationale Anmeldenummer: PCT/EP2018/000294
(87) Internationale Veröffentlichungsnummer: WO 2018/224181

(56) Entgegenhaltungen:
- DE-A1- 19 622 945
- DE-A1-102013 014 070
- DE-A1-102014 103 763

## Beschreibung

Die vorliegende Erfindung betrifft einen Kraftstoffinjektor gemäß Anspruch 1.

Mit der Kombination einer Vorkammer, insbesondere gespülten Vorkammer, und einem Hochdruck-Brenngasinjektor kann ein Motorkonzept realisiert werden, welches mit geringem Brenngasschlupf und hohen spezifischen Leistungen (ähnlich Diesel) mit nur einem Kraftstoff in Form des Brenngases betrieben werden kann. Die Zündung wird hierbei mittels der Vorkammer (Pilot) bewirkt, woraufhin das hochdruckbeaufschlagte Brenngas in den durch die Pilotverbrennung erhitzten Brennraum eingedüst wird, wobei es mit einer Diffusionsverbrennung verbrennen kann. Aufgrund regelmäßig enger Bauraumverhältnisse ergeben sich jedoch erwartungsgemäß Probleme, die Vorkammeranordnung nebst dem Hochdruck-Injektorteil am Kraftstoffinjektor platzsparend unterzubringen und hierbei zudem auch den Fertigungsaufwand gering zu halten Solche Kraftstoffinjektoren sind aus DE19622945A1 bekannt.

Ausgehend hiervon liegt der vorliegenden Erfindung die Aufgabe zugrunde, einen Kraftstoffinjektor der vorgenannten Art bereitzustellen, welcher im Hinblick auf Fertigungsaufwand und Unterbringung der Vorkammeranordnung vorteilhaft einfach und bauraumsparend bereitstellbar ist.

Diese Aufgabe wird durch einen Kraftstoffinjektor mit den Merkmalen des Anspruchs 1 gelöst. Vorteilhafte Weiterbildungen und Ausführungsformen sind in den weiteren Ansprüchen angegeben.

Vorgeschlagen wird erfindungsgemäß ein Kraftstoffinjektor, welcher für eine Brennkraftmaschine vorgesehen ist, insbesondere für einen Großmotor. Der Kraftstoffinjektor ist insbesondere für die Verwendung mit Brenngas bereitgestellt, vorzugsweise zum Beispiel in Form von Erdgas, daneben zum Beispiel in Form von Sondergas, Deponiegas, Biogas, oder einem anderen Brenngas. Insofern ist der Kraftstoffinjektor vorzugsweise mit einem Gasmotor verwendbar, insbesondere einem fremdgezündeten Gasmotor. Allgemein kann eine den Kraftstoffinjektor aufweisende Brennkraftmaschine ein Motor eines Kraftfahrzeugs, einer Lok oder eines Nutz- oder Sonderfahrzeugs sein, vorzugsweise z.B. eines seegängigen Fahrzeugs wie einem Schiff, oder zum Beispiel einer stationären Einrichtung, z.B. eines Blockheizkraftwerks, eines (Not-)Stromaggregats, z.B. auch für Industrieanwendungen bereitgestellt sein, allgemein sowohl für Anwendungen on-shore als auch off-shore. Der Kraftstoffinjektor ist vorzugsweise zur ausschließlichen Verwendung mit Brenngas bereitgestellt.

Der vorgeschlagene Kraftstoffinjektor weist eine injektorinterne Vorkammer auf, welche - im Unterschied zur sogenannten "ungespülten" Vorkammer - bevorzugt als "gespülte" Vorkammer bereitgestellt ist. Auf an sich bekannte Weise ist eine solch gespülte Vorkammer eingerichtet, eigens mit Kraftstoff gespeist bzw. beschickt zu werden, i.e. vorliegend insbesondere mit Brenngas, insoweit "(brenngas)gespült", i.e. je für eine nachfolgende Zündung (des hiermit gebildeten Brenngasgemischs) in der Vorkammer. Eine Brenngaseinbringung in die Vorkammer (Spülung) erfolgt hierbei bevorzugt niederdruckbehaftet, z.B. bei Druckniveaus von 5 bar bis 10 bar. Für die Brenngasspeisung der gespülten Vorkammer weist der Kraftstoffinjektor z.B. eine Ventilvorrichtung auf.

Via Zündung in der Vorkammer können - im Rahmen eines mit dem Kraftstoffinjektor ausführbaren Brennverfahrens - Fackelstrahlen (Pilotverbrennung) generiert werden, welche - bevorzugt über Übertrittsöffnungen der Vorkammer - in den Hauptbrennraum (an einer Brennkraftmaschine) übertreten können. Mit Übertritt in den Hauptbrennraum kann darin sodann die Gemischzündung bewirkt werden, wobei das Gemisch vorliegend insbesondere mit hochdruckbeaufschlagtem Brenngas als Hauptbrennstoff gebildet wird, und wobei das hochdruckbeaufschlagte Brenngas weiterhin insbesondere auch über den Kraftstoffinjektor ausdüsbar ist.

Zur Ausdüsung des hochdruckbeaufschlagten Brenngases weist der Kraftstoffinjektor einen Hochdruckinjektorteil auf, wobei eine Ausdüsung mit einem Brenngas-Druckniveau jenseits 300 bar oder gar 350 bar vorgesehen wird. Der Hochdruckinjektorteil umfasst hierbei eine Düsenanordnung zur Ausdüsung des Brenngases, zum Beispiel gebildet mittels einer oder einer Anzahl von Düsenöffnungen, weiterhin ein (axial) hubverschiebliches Düsenventilglied. Das Düsenventilglied kann ein- oder mehrteilig gebildet sein, insbesondere stangenförmig, wobei es im Rahmen der vorliegenden Erfindung insbesondere als Düsennadel wirkt und/oder als solche bereitgestellt ist.

Zur (Hub-)Steuerung des Düsenventilglieds kann der Kraftstoffinjektor z.B. einen hydraulischen Steuerkreis aufweisen, zum Beispiel gebildet mittels eines Pilotventils und zugeordneter Aktuatorik, insoweit eine indirekte Steuerung, oder beispielsweise eine direkte Steuerung des Düsenventilglieds vorsehen.

Mit einem düsenseitigen (der Düsenanordnung zugewandten) Endabschnitt ist das Düsenventilglied erfindungsgemäß in einem Hochdruckraum des Hochdruckinjektorteils aufgenommen. Der Hochdruckraum ist insoweit vorzugsweise ein Düsenraum, in welchen hochdruckbeaufschlagtes Brenngas einbringbar und aus welchem das hochdruckbeaufschlagte Brenngas in Abhängigkeit der Stellung des Düsenventilglieds an die Düsenanordnung zum Zwecke eines Ausdüsens abströmen kann. Bei vorteilhaft bauraumsparenden Ausgestaltungen des Kraftstoffinjektors ist der Hochdruckraum zum Beispiel rohrförmig umgrenzt. Hierbei kann zwischen der Umfangswand und dem Düsenventilglied ein Spalt gebildet sein, insbesondere z.B. ein Ringspalt, welcher Spalt sich - als Brenngasreservoir bzw. Hochdruckraum - um den Endabschnitt des Düsenventilglieds oder auch in Richtung zum düsenfernen Ende des Kraftstoffinjektors darüber hinaus erstrecken kann.

Der vorgeschlagene Kraftstoffinjektor weist weiterhin eine Vorkammeranordnung auf, im Rahmen derer bzw. bei welcher der Hochdruckraum des Hochdruckinjektorteils über einen düsenseitigen Endabschnitt (des Hochdruckraums) von der Vorkammer umfangen abgeteilt ist, insbesondere mittels einer Trennwandanordnung. Hierbei liegt die Vorkammer - vorzugsweise ringförmigen Querschnitt aufweisend - insbesondere radial außen (insbesondere radial außerhalb der Trennwandanordnung) und der düsenseitige Endabschnitt des Hochdruckraums radial innen (insbesondere radial innerhalb der Trennwandanordnung), insbesondere umfangen von der hierbei abgeteilten Vorkammer. Mit dieser Erfindungs-Ausgestaltung Ausgestaltung des Kraftstoffinjektors gelingt es, die injektorinterne Vorkammer bauraumsparend am Kraftstoffinjektor unterzubringen und hierbei auch den Fertigungsaufwand vorteilhaft gering zu halten. Daneben werden weitere vorteilhafte Effekte erzielt, welche nachfolgend im Rahmen vorteilhafter Weiterbildungen des Kraftstoffinjektors noch näher erörtert werden.

Gemäß einer Ausführungsform des Kraftstoffinjektors nach Anspruch 1 ist die Vorkammeranordnung mittels eines Vorkammerkörpers gebildet, innerhalb dessen auch der Endabschnitt des Hochdruckraums von der Vorkammer umfangen abgeteilt ist, das heißt mittels der Trennwandanordnung. Der Vorkammerkörper kann hierbei hinsichtlich der Form einem herkömmlichen Düsenkörper angenähert sein, zum Beispiel mittels einer Spannmutter gegen das Injektorgehäuse verspannt sein. Ein solcher Vorkammerkörper ist vorzugsweise aus hochwarmfesten Werkstoff hergestellt, so dass die extremen Temperaturen aus der Verbrennung in der Vorkammer beherrschbar sind.

Weiterhin weist die Vorkammeranordnung wenigstens ein hülsenförmiges Element für die Bildung der Trennwandanordnung bzw. zur Abteilung des düsenseitigen Endabschnitts des Hochdruckraumes von der diesen umfangenden Vorkammer auf. Das hülsenförmige bzw. rohrstückförmige Element kann auf vorteilhaft einfache Weise gefertigt sowie im Kraftstoffinjektor angeordnet werden, insbesondere in einem wie vorstehend erörterten Vorkammerkörper. Vorgesehen ist, dass das hülsenförmige Element den düsenseitigen Endabschnitt des Düsenventilglieds hierbei umgibt, ggf. auch führt, mithin als Trennwand zwischen dem Hochdruckraum und der Vorkammer oder weiterhin auch als Führung wirken kann. Allgemein ist das hülsenförmige Element z.B. zwischen dem düsenseitigen Ende des Kraftstoffinjektors bzw. des Vorkammerkörpers und einem Deckelelement (insbesondere am Vorkammerkörper) wie etwa einem Gehäuseelement, z.B. einer Zwischenscheibe, angeordnet. Mittels des hülsenförmigen Elements wird es vorteilhaft-möglich, das Material der außenumfangenden Vorkammerwandung, insbesondere des Vorkammerkörpers, unterschiedlich von jenem des innenliegenden, hülsenförmigen Elements wählen zu können, wodurch unterschiedlichen Anforderungen an die jeweilige Temperaturfestigkeit auf einfache Weise nachgekommen werden kann, mithin Kosten reduziert werden können. Zum Beispiel kann eine mittels des hülsenförmigen Elements gebildete Trennwandanordnung, welche aufgrund des innen- bzw. im Hochdruckraum um das Düsenventilglied strömenden hochdruckbeaufschlagten Gases stärker gekühlt wird, somit mit geringerer Warmfestigkeit als die Außenwandung der Vorkammer ausgeführt werden.

Mit einer solchen Beispiel wird es vorteilhaft auch möglich, einen Sitz für das Düsenventilglied, insbesondere am Vorkammerkörper düsenendseitig gebildet, auf einfache Weise endbearbeiten (z.B. schleifen) zu können, als die Zugänglichkeit zum Sitz gewahrt ist, solange das hülsenförmige Element zur Abteilung der Vorkammer noch nicht im bzw. am Vorkammerkörper angeordnet ist (auch können so vorteilhaft einfach Überströmöffnungen der Vorkammer und/oder die Düsenanordnung am Vorkammerkörper gebildet und feinbearbeitet werden). Zur finalen Festlegung des hülsenförmigen Elements am Kraftstoffinjektor bzw. dem Vorkammerkörper kann ein Form- und/oder Kraftschluss vorgesehen werden, zum Beispiel im Rahmen eines Verspannens (wobei ein Stoffschluss vorteilhaft entbehrlich ist).

Bei Ausgestaltungen mit einem hülsenförmigen Element kann die Trennwandanordnung z.B. auch als doppelwandige Hülse ausgeführt sein, oder ein zweites Hülsenelement vorgesehen werden, welches das hülsenförmige Element umgibt, insbesondere je unter Wahrung eines Umfangsspalts. Bei solchen erfindungsgemäßen Ausgestaltungen, wobei eine mehrwandige Trennwand zur Abteilung der Vorkammer vom Endabschnitt des Hochdruckraumes vorgesehen ist wirkt das der Vorkammer zugewandte (radial außen liegende) Wandelement oder Hülsenelement, vorzugsweise als Blech bereitgestellt, vorzugsweise als Hitzeschild. Durch den Hitzeschild kann vermieden werden, dass der Endabschnitt des Hochdruckraums Maximaltemperaturen ausgesetzt wird, da mit dem Hitzeschild ein gedämpfter Temperaturverlauf erzielt wird, wodurch die Bauteilbelastung deutlich reduziert werden kann. Insoweit wird hiermit bei wiederum äußerst einfacher Fertigbarkeit eine weiter verbesserte Wärmeisolation des Hochdruckinjektorteils erzielt.

Bei weiteren bevorzugten Ausgestaltungen des Kraftstoffinjektors, welche ebenfalls einen Vorkammerkörper vorsehen, kann dieser eine integral damit gebildete Trennwand(anordnung) aufweisen, mittels welcher der Endabschnitt des Hochdruckraums von der Vorkammer umfangen abgeteilt ist. Zum Beispiel kann hierbei auch die Vorkammer sämtlich vom Vorkammerkörper umschlossen bzw. gekapselt sein. Mit solchen Ausgestaltungen wird insbesondere vorgeschlagen, dass der Vorkammerkörper mittels eines additiven Fertigungsverfahrens hergestellt ist, entsprechend zum Beispiel 3D-Druck. Mit einem solchen Fertigungsverfahren wird weiterhin ein großer Gestaltungsspielraum beim Vorkammerdesign eröffnet, zum Beispiel im Hinblick auf Vorkammerquerschnitte, die Unterbringung von Turbulatoren oder sonstigen Einsätzen, oder auch im Hinblick auf die Integration von Kühlkanälen. Weiterhin ist mit solch einem Vorkammerkörper eine äußerst einfache Montage möglich, wobei eine Selbstzentrierung zum Beispiel durch Zentrierkonusse an Injektorgehäuse und Vorkammerkörper oder anderweit im Rahmen einer Verspannung erfolgen kann.

Allgemein wird im Rahmen der vorliegenden Erfindung auch vorgeschlagen, dass der Kraftstoffinjektor eine - insbesondere intern bereitgestellte - Zündeinrichtung aufweist, das heißt zur Vorkammerzündung, z.B. eine Zündkerze oder eine Laserzündeinrichtung. In besonders bevorzugter Weiterbildung kann der Kraftstoffinjektor hierbei auch eingerichtet sein, die Vorkammer mittels Brenngases zu speisen, welches als Leckagegas am Hochdruckinjektorteil anfällt. Eine solche Speisung, insbesondere ausschließlich injektorintern ausgestaltet, ermöglicht äußerst kurze Leitungswege, wobei zum Beispiel ein Niederdruck-Brenngas-Zwischenspeicher im Injektor oder die Möglichkeit der Zuspeisung über eine externe Quelle zusätzlich vorgesehen werden kann.

Im Rahmen der vorliegenden Erfindung wird auch eine Brennkraftmaschine vorgeschlagen, welche wenigstens einen wie vorstehend erörterten Kraftstoffinjektor aufweist.

Weitere Merkmale und Vorteile der Erfindung ergeben sich aus der nachfolgenden Beschreibung von Ausführungsbeispielen der Erfindung, anhand der Figuren der Zeichnungen, die erfindungswesentliche Einzelheiten zeigen, und aus den Ansprüchen. Die einzelnen Merkmale können je einzeln für sich oder zu mehreren in verschiedener Kombination bei einer Variante der Erfindung verwirklicht sein.

Bevorzugte Ausführungsformen der Erfindung werden nachfolgend anhand der beigefügten Zeichnungen näher erläutert. Es zeigen:
- Fig. 1: exemplarisch und schematisch in einer abgebrochenen und vereinfachten Schnittansicht einen Kraftstoffinjektor gemäß einem möglichen Beispiel.
- Fig. 2: exemplarisch und schematisch in einer abgebrochenen und vereinfachten Schnittansicht einen Kraftstoffinjektor gemäß einem weiteren möglichen Beispiel.
- Fig. 3: exemplarisch und schematisch in einer abgebrochenen und vereinfachten Schnittansicht einen Kraftstoffinjektor analog zu Fig. 2 gemäß einem weiteren möglichen Beispiel.
- Fig. 4: exemplarisch und schematisch in einer abgebrochenen und vereinfachten Schnittansicht einen Kraftstoffinjektor analog zu Fig. 2 und 3 gemäß noch einem weiteren möglichen Beispiel.
- Fig. 5: exemplarisch und schematisch in einer abgebrochenen und vereinfachten Schnittansicht einen Kraftstoffinjektor gemäß einer möglichen Ausführungsform der Erfindung.

In der nachfolgenden Beschreibung und den Zeichnungen entsprechen gleichen Bezugszeichen Elemente gleicher oder vergleichbarer Funktion.

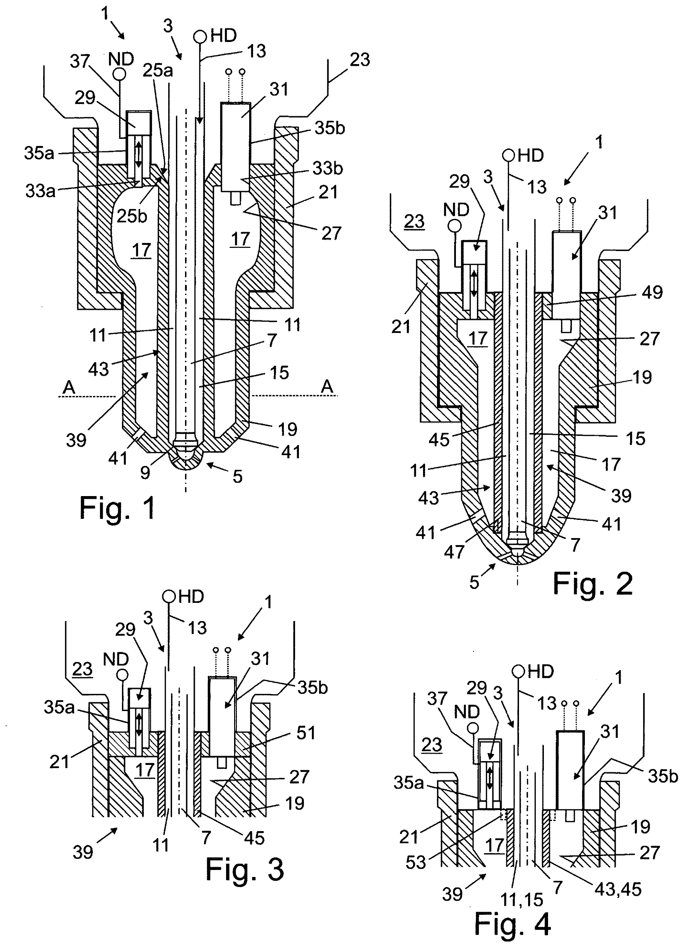

Fig. 1 zeigt einen Kraftstoffinjektor 1, welcher für einen Brenngasbetrieb vorgesehen ist, insbesondere zur Ausdüsung von hochdruckbeaufschlagtem Brenngas, welches an den Kraftstoffinjektor 1 zum Beispiel in Form von Erdgas versorgbar ist.

Der Kraftstoffinjektor 1 umfasst für die Brenngasausdüsung einen Hochdruckinjektorteil 3, welcher eine Düsenanordnung 5 aufweist, gebildet mittels einer Anzahl von Düsenöffnungen, sowie ein (axial) hubverschiebliches Düsenventilglied 7. Zur Hubsteuerung des Düsenventilglieds 7 weist der Kraftstoffinjektor 1 bzw. dessen Hochdruckinjektorteil 3 einen Steuerkreis auf, welcher in den Figuren jedoch nicht veranschaulicht ist.

Das insbesondere stangenförmige Düsenventilglied 7, vorliegend in Form einer Düsennadel, wirkt gegen einen düsenseitig am Kraftstoffinjektor 1 angeordneten (Düsenventil-)Sitz 9, d.h. mit einem düsenseitigen Ende, und vermag somit in Abhängigkeit seiner Hubsteuerstellung einen Strömungsweg aus einem Hochdruckraum 11 zu der Düsenanordnung 5 selektiv zu öffnen oder zu versperren. Der Hochdruckraum 11 des Hochdruckinjektorteils 3 ist dabei zur Brenngasbeaufschlagung mit hochdruckbeaufschlagtem Brenngas bereitgestellt (insoweit ein Brenngas-Hochdruckraum 11), wozu der Kraftstoffinjektor 1 einen daran geführten Hochdruck(versorgungs)kanal 13 aufweist. Weiterhin ist das Düsenventilglied 7 mit seinem düsenseitigen (an den Sitz 9 geführten) Endabschnitt in dem Hochdruckraum 11 des Hochdruckinjektorteils 3 aufgenommen, d.h. über eine axiale Länge, wobei ein Ringspalt 15 um den Endabschnitt gebildet wird, in welchem das hochdruckbeaufschlagte Brenngas für eine Ausdüsung aufnehmbar ist.

Der Kraftstoffinjektor 1 weist weiterhin eine (injektorinterne) Vorkammer 17 auf, welche in einem Vorkammerkörper 19 des Kraftstoffinjektors 1 gebildet ist, wobei der Vorkammerkörper 19 weiterhin auch den Sitz 9 für das Düsenventilglied 7 bildet, vgl. Fig. 1, sowie die Düsenanordnung 5 aufweist. Der Vorkammerkörper 19 ist der Geometrie eines herkömmlichen Düsenkörpers angenähert, insbesondere zylindrisch gestuft außenkonturiert, und mittels einer Spannmutter 21 düsenfern gegen das Injektorgehäuse 23 verspannt. Über Korrespondenz-Zentrierkonusse 25a, b ist der Vorkammerkörper 19 - vorteilhaft einfach - gegenüber dem Injektorgehäuse 23 auch koaxial ausgerichtet bzw. zentriert.

Bei dem in Fig. 1 gezeigten Beispiel ist der Vorkammerkörper 19 mittels eines additiven Fertigungsverfahrens hergestellt, z.B. durch (Laser-)Sintern, das heißt schichtweise aufgebaut, insbesondere aus hochwarmfesten Material. Durch dieses Fertigungsverfahren gelingt es, die Vorkammer 17 vollständig eingekapselt im Vorkammerkörper 19 auszubilden und auch kompliziertere Geometrien im Zusammenhang mit der Vorkammer 17, z.B. eine Ausbauchung 27 oder Aufweitung im düsenferneren Bereich oder auch einen sternförmigen Querschnitt im Vorkammerkörper 19, problemlos zu fertigen. Einher geht hiermit auch der Vorteil, den Vorkammerkörper 19 einfach handhabbar einteilig ausbilden zu können.

Zur Ausführung des mit dem Kraftstoffinjektor 1 vorgesehenen Brennverfahrens - Vorkammerzündung (am niederdruckbeaufschlagten Brenngas) und nachfolgende Zündung am ausgedüsten (hochdruckbeaufschlagten) Brenngas in einem Hauptbrennraum mittels der Fackelstrahlen aus der Vorkammerzündung - ist die Vorkammer 17 bei der in Fig. 1 veranschaulichten Ausgestaltung eine gespülte Vorkammer 17, an welcher düsenfern (stirnseitig) die Anordnung sowohl einer Niederdruck-Zudosiervorrichtung bzw. -speisevorrichtung 29 für Brenngas (zur Spülung der Vorkammer) als auch einer Zündeinrichtung 31 vorgesehen ist. Hierfür weist der Vorkammerkörper 19 Durchgangsöffnungen 33a,b auf, um die Niederdruck-Speisevorrichtung 29 und die Zündeinrichtung 31 geeignet an der Vorkammer 17 mit dieser in Kommunikation zu bringen, mithin deren Funktionalität des Zudosierens bzw. Zündens in die bzw. in der Vorkammer 17 zu ermöglichen. Einbauräume 35a, b für die Niederdruck-Zudosiervorrichtung 29 bzw. die Zündeinrichtung 31 können weiterhin (stirnseitig) am benachbarten Injektorgehäuse 23 vorgesehen werden.

Als Zündeinrichtung 31 kann eine Zündkerze dienen, als Zudosiervorrichtung 29 - für die Spülung der Vorkammer 17 - ein Niederdruck-Gasdosierventil. An das Niederdruck-Gasdosierventil ist eine Niederdruck-Brenngas-Versorgungsleitung 37 im Kraftstoffinjektor 1 geführt. Eine Speisung kann hierbei über eine externe Quelle und/oder zum Beispiel auch - vorteilhaft unaufwändig, insbesondere im Hinblick auf damit entbehrliche Leckageaufbereitung - aus injektorinterner, niederdruckbehafteter Brenngas-Leckage aus dem Hochdruckinjektorteil 3 erfolgen.

Die - mit dem Vorkammerkörper 19 gebildete - Vorkammeranordnung 39 ist weiterhin derart ausgestaltet, dass der Hochdruckraum 11 über einen düsenseitigen Endabschnitt (des Hochdruckraums 11) von der Vorkammer 17 umfangen abgeteilt ist, vgl. Fig. 1. Insoweit ist die Vorkammer 17 um den Hochdruckraum 11 herum am Kraftstoffinjektor 1 gebildet, woneben die Vorkammer 17 auch bis nahe an die Düsenanordnung 5 des Hochdruckinjektorteils 3 bzw. das düsenseitige Ende des Vorkammerkörpers 19 geführt ist. Einher geht hiermit der weitere Vorteil, dass die Überströmöffnungen 41 der Vorkammer 17, welche ebenfalls an dem düsenseitigen Ende der Vorkammer 17 im Vorkammerkörper 19 gebildet sind, auch den Übertritt von Fackelstrahlen (Pilot Zündung) unmittelbar in den Brennraum ermöglichen (in Fig. 1 ist die Trennebene A Brennraum-Zylinderkopf exemplarisch gestrichelt eingezeichnet).

Die Überströmöffnungen 41 können bei dem vorgeschlagenen Kraftstoffinjektor 1, bei welchem die Vorkammer 17 (über den düsenseitigen Endabschnitt) insoweit ringförmigen Querschnitt aufweist, zudem vorteilhaft um die Brenngas-Düsenanordnung 5 herum angeordnet werden, so dass sich eine vorteilhafte 360°-Abdeckung der Fackelstrahlausbringung in den Brennraum erzielen lässt, mithin ein vorteilhaft gleichmäßiger Abbrand. Beachtlich ist weiterhin, dass hierbei auch eine äußerst kompakte Bauform (nebst einfacher Herstellung) erzielt wird.

Bei dem Kraftstoffinjektor 1 nach Fig. 1 weist die Vorkammeranordnung 39 bzw. der Kraftstoffinjektor 1 zur Abteilung der Vorkammer 17 vom Hochdruckraum 3 eine Trennwandanordnung 43 auf, welche als einfache, insbesondere rohrstückförmige, Trennwand integral mit dem Vorkammerkörper 19 gebildet ist, wobei die Trennwand insoweit auch die Wandung des Hochdruckraums 3 über den Endabschnitt desselben bildet. Bei der aufgezeigten Ausführungsform, wie auch bei den weiteren nachstehend erörterten Ausführungsformen des Kraftstoffinjektors 1, erstreckt sich hierbei die Vorkammer 17 über im Wesentlichen die gesamte axiale Länge des Vorkammerkörpers 19, insbesondere auch der Hochdruckraum 3 um den Endabschnitt des Düsenventilglieds 7.

Fig. 2 zeigt nunmehr eine Ansicht eines Kraftstoffinjektors 1 gemäß einem weiteren möglichen Beispiel, wobei im Unterschied zur vorstehend erörterten Ausführungsform die Vorkammeranordnung 39 mit einem Vorkammerkörper 19 gebildet ist, in welchem zur Abteilung bzw. Trennung des den Endabschnitt des Düsenventilglieds 7 umgebenden Hochdruckraums 11 von der den Endabschnitt des Hochdruckraums 11 umgebenden Vorkammer 17 eine separat gebildete Trennwandanordnung 43 angeordnet ist.

Bei dem in Fig. und 2 gezeigten Beispiel ist die Trennwandanordnung 43 mittels einer Trennwand in Form einer einfachen Hülse bzw. eines Hülsenelements 45 gebildet, insbesondere wiederum rohrstückförmig. Zur positionstreuen Aufnahme und Fixierung ist das Hülsenelement 45 düsenseitig in einer Ringstufe 47 des Vorkammerkörpers 19 formschlüssig festgelegt, an einem düsenfernen Ende zum Beispiel an einer ringförmigen Positionierschulter 49 im Zusammenwirken mit der Stirnseite des Injektorgehäuses 23. Mit einer solchen Ausgestaltung ergibt sich insbesondere der Vorteil, die Zugänglichkeit zum Nadelsitz 9 so lange barrierefrei zu ermöglichen, solange das Hülsenelement 45 noch nicht in den Vorkammerkörper 19 eingebracht ist, so dass hierbei der Sitz 9 vorteilhaft einfach feinbearbeitbar ist.

Bei dem Beispiel nach Fig. 2 wird vorzugsweise auch ein additives Fertigungsverfahren zur Herstellung des Vorkammerkörpers 19 angewendet, so dass die exemplarisch aufgezeigte Form des Vorkammerkörpers 19, welche hierbei Hinterschneidungen in Form der Positionierschulter 49 an der düsenfernen Stirnseite aufweist, auch problemlos fertigbar ist.

Die **Figuren 3 und 4** zeigen mögliche Beispiele des Kraftstoffinjektors 1 nach Fig. 2. Bei der in Fig. 3 veranschaulichten Ausführungsform ist der Vorkammerkörper 19 im Unterschied zu dem Kraftstoffinjektor 1 nach Fig. 2 hinterschneidungsfrei gebildet, wozu der Vorkammerkörper 19 am düsenfernen Ende keine Positionierschulter 49 aufweist. Der Vorkammerkörper 19 ist somit auch mittels nicht additiver Verfahren auf einfache Weise herstellbar, insbesondere gleichsam herkömmlicher Düsenkörper. Zur Deckelung und Positionierung des Hülsenelements 45 an der düsenfernen Stirnseite kann hierbei eine Zwischenscheibe 51 dienen, welche für die radiale (und dichtende) Abstützung sorgt, während mit dem Injektorgehäuse 23 zum Beispiel die Klemmung des Hülsenelements 45 zur positionstreuen Festlegung erfolgt, das heißt im Rahmen eines Verspannens der Anordnung aus Vorkammerkörper 19, Zwischenscheibe 51 und Injektorgehäuse 23 mittels der Spannmutter 21.

Alternativ dazu zeigt Fig. 4 einen Beispiel des Kraftstoffinjektors 1, bei welchem der Vorkammerkörper 19 analog zum Beispiel nach Fig. 3 gebildet ist, wobei jedoch keine Zwischenscheibe 51 zur Positionierung des Hülsenelements 45 bzw. zur Deckelung des Vorkammerkörpers 19 vorgesehen ist.

Bei dem Beispiel nach Fig. 4 deckelt vielmehr das Injektorgehäuse 23 mit dessen düsenseitiger Stirnseite den Vorkammerkörper 19 an dessen offenem (düsenfernen) Ende unmittelbar, wobei auch die Zündeinrichtung 31 und das Brenngas-Niederdruckventil 29 im Wesentlichen nurmehr Einbauraum 35a, b im Injektorgehäuse 23 beanspruchen. Eine Klemmung des Hülsenelements 45 erfolgt hierbei auch unmittelbar über das Injektorgehäuse 23, woneben an dessen Stirnseite zum Beispiel ein Ringbund 53 oder eine Ringnut vorgesehen werden kann, um eine radiale Abstützung des Hülsenelements zur Verbesserung der Positionstreue auch hierbei zu ermöglichen (ein Ringbund 53 ist exemplarisch gestrichelt eingezeichnet).

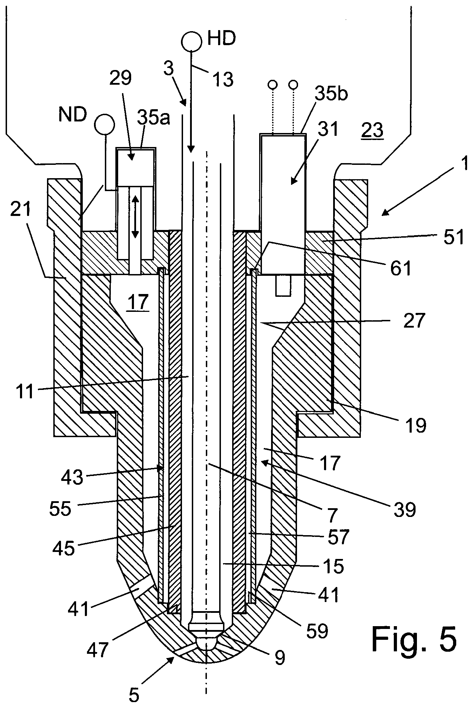

Fig. 5 zeigt nunmehr exemplarisch eine vorteilhafte Ausführungsform des Kraftstoffinjektors 1, welche jenes Beispiel nach Fig. 2 in Hinblick auf den Vorkammerkörper 19 und dessen Deckelung angenähert ist. Im Unterschied zu den vorausgegangenen Ausgestaltungen des Kraftstoffinjektors 1 nach den Figuren 1 mit 4, weist der Kraftstoffinjektor 1 nach Fig. 5 eine Trennwandanordnung 43 auf, welche mehrwandig gebildet ist.

Bei dieser Trennwandanordnung 43, welche vorliegend zwei Trennwandelemente 45, 55 aufweist, ist analog zu den Beispielen nach Fig. 2 bis Fig. 4 ein Hülsenelement 45, insbesondere ein inneres bzw. erstes Hülsenelement 45 vorgesehen, welches hinreichend druckfest gebildet ist, so dass die druckfeste Abteilung des Hochdruckraums 3 von der außen umlaufenden Vorkammer 17 zuverlässig bewirkt ist, während das zweite Hülsenelement 55 als Hitzeschildelement fungiert. Hierzu ist das zweite Hülsenelement 55 mit Ringspalt 57 zu dem inneren Hülsenelement 45 dieses umfangend im Vorkammerkörper 19 angeordnet, wobei der Ringspalt 57 quasi einen Isolierspalt bildet oder z.B. auch als (z.B. kühlmitteldurchströmbarer) Kühlkanal vorgesehen werden kann.

Bei dieser Vorkammeranordnung 39 ist insoweit die Vorkammer 17 außen um das zweite Hülsenelement 55 bzw. dieses umfangend gebildet. Das Hitzeschildelement in Form des zweiten Trennwand- bzw. Hülsenelements 55 ist als dünnwandiges Blech bereitgestellt und düsenseitig - wie auch das erste Hülsenelement 45 - positionstreu in einer dazu bereitgestellten Ringstufe 59 des Vorkammerkörpers 19 angeordnet, an einem düsenfernen Ende in z.B. einer Ringnut 61 gefangen, welche bei dieser Ausgestaltung zum Beispiel in einer Zwischenscheibe 51 vorgesehen ist (alternativ zum Beispiel unmittelbar am Injektorgehäuse 23 wie etwa bei Fig. 4).

Mittels dieser doppelwandigen Trennwand 45, 55 wird eine verbesserte Hitzeschutzwirkung für den Hochdruckraum 3 erzielt, so dass die Bauteilbelastung dort deutlich reduziert werden kann. Bewirkt wird dies dadurch, dass mittels des Hitzeschildelements 55 die Wärmeübertragung durch Strahlung seitens der Vorkammer 17 bzw. der Verbrennung darin vorteilhaft reduziert wird.

Angemerkt sei abschließend noch, dass hochdruckbeaufschlagtes Brenngas, welches im Rahmen eines Brennkraftmaschinenbetriebs mit dem Kraftstoffinjektor 1 bzw. zur Ausdüsung über denselben vorgesehen ist, vorzugsweise komprimiertes (gasförmiges) Erdgas ist (CNG; Compressed Natural Gas). Weiterhin kann zur Niederdruckspeisung der Vorkammer 17 z.B. das Verdampfen von verflüssigtem Brenngas aus einem Flüssiggasvorrat vorgesehen werden (wie dieser oftmals an Bord von Wasserfahrzeugen ohnehin vorhanden ist). Verflüssigtes Brenngas kann hierbei insbesondere flüssiges Erdgas sein (LNG; liquefied natural gas).

### BEZUGSZEICHENLISTE

- 1: Kraftstoffinjektor
- 3: Hochdruckinjektorteil
- 5: Düsenanordnung
- 7: Düsenventilglied
- 9: Sitz
- 11: Hochdruckraum
- 13: Hochdruckkanal
- 15: Ringspalt
- 17: Vorkammer
- 19: Vorkammerkörper
- 21: Spannmutter
- 23: Injektorgehäuse
- 25a,b: Zentrierkonus
- 27: Ausbauchung / Aufweitung
- 29: Niederdruck-Speisevorrichtung
- 31: Zündvorrichtung
- 33a,b: Durchgangsöffnung
- 35a,b: Einbauraum
- 37: Niederdruck-Brenngas-Versorgungsleitung
- 39: Vorkammeranordnung
- 41: Überströmöffnung
- 43: Trennwandanordnung
- 45: Hülsenelement
- 47: Ringstufe
- 49: Positionierschulter
- 51: Zwischenscheibe
- 53: Ringbund
- 55: Trennwandelement
- 57: Ringspalt
- 59: Ringstufe
- 61: Ringnut
- A: Trennebene

## Patentansprüche

1. Kraftstoffinjektor (1), aufweisend:
- eine injektorinterne Vorkammer (17),
- einen Hochdruckinjektorteil (3) für eine Brenngasausdüsung, welcher eine Düsenanordnung (5) sowie ein hubverschiebliches Düsenventilglied (7) aufweist, welches mit einem düsenseitigen Endabschnitt in einem Hochdruckraum (11) des Hochdruckinjektorteils (3) aufgenommen ist,
- eine Vorkammeranordnung (39), im Rahmen derer der Hochdruckraum (11) des Hochdruckinjektorteils (3) über einen düsenseitigen Endabschnitt von der Vorkammer (17) umfangen abgeteilt ist, **dadurch gekennzeichnet dass**, die Vorkammeranordnung (39) eine mehrwandige Trennwand (43, 45, 55) zur Abteilung des düsenseitigen Endabschnitts des Hochdruckraums (11) von der diesen umfangenden Vorkammer (17) aufweist.

2. Kraftstoffinjektor (1) nach Anspruch 1,
**dadurch gekennzeichnet, dass**
- die Vorkammeranordnung (39) wenigstens ein hülsenförmiges Element (45, 55) zur
Abteilung des düsenseitigen Endabschnitts des Hochdruckraumes (11) von der diesen umfangenden Vorkammer (17) aufweist.

3. Kraftstoffinjektor (1) nach einem der vorhergehenden Ansprüche,
**dadurch gekennzeichnet, dass**
- ein Element (55) zur Abteilung des düsenseitigen Endabschnitts des Hochdruckraums (11) von der diesen umfangenden Vorkammer (17) als Hitzeschild bereitgestellt ist.

4. Kraftstoffinjektor (1) nach einem der vorhergehenden Ansprüche,
**dadurch gekennzeichnet, dass**
- die Vorkammeranordnung (39) mittels eines Vorkammerkörpers (19) gebildet ist, innerhalb dessen auch der Endabschnitt des Hochdruckraums (11) von der Vorkammer (17) umfangen abgeteilt ist.

5. Kraftstoffinjektor (1) nach Anspruch 4,
**dadurch gekennzeichnet, dass**
- der Vorkammerkörper (19) eine integral damit gebildete Trennwand (43) aufweist, mittels welcher der Endabschnitt des Hochdruckraums (11) von der Vorkammer (17) umfangen abgeteilt ist.

6. Kraftstoffinjektor (1) nach einem der vorhergehenden Ansprüche,
**dadurch gekennzeichnet, dass**
- der Vorkammerkörper (19) einen Sitz (9) für das Düsenventilglied (7) bildet; und/oder
- der Vorkammerkörper (19) die Düsenanordnung (5) des Hochdruckinjektorteils (3) aufweist; und/oder
- der Vorkammerkörper (19) Überströmöffnungen (41) der Vorkammer (17) aufweist.

7. Kraftstoffinjektor (1) nach einem der Ansprüche 4 bis 6,
**dadurch gekennzeichnet, dass**
- der Vorkammerkörper (19) mittels eines additiven Fertigungsverfahrens hergestellt ist.

8. Kraftstoffinjektor (1) nach Anspruch 7,
**dadurch gekennzeichnet, dass**
- die Vorkammer (17) ringförmigen Querschnitt aufweist.

9. Kraftstoffinjektor (1) nach einem der vorhergehenden Ansprüche,
**dadurch gekennzeichnet, dass**
- der Kraftstoffinjektor (1) eine Zündeinrichtung (31) und/oder eine Niederdruck-Brenngasspeisevorrichtung (29) an der Vorkammer (17) aufweist.

10. Kraftstoffinjektor (1) nach einem der vorhergehenden Ansprüche,
**dadurch gekennzeichnet, dass**
- der Kraftstoffinjektor (1) eingerichtet ist, die Vorkammer (17) mittels Brenngas zu speisen, welches als Leckagegas am Hochdruckinjektorteil (3) anfällt.

11. Brennkraftmaschine,
**gekennzeichnet durch**
- wenigstens einen Kraftstoffinjektor (1) nach einem der vorhergehenden Ansprüche.

## Claims

1. Fuel injector (1), having:
- a prechamber (17) within the injector,
- a high-pressure injector part (3) for an ejection of combustion gas, which high-pressure injector part (3) has a nozzle arrangement (5) and a nozzle valve member (7) which can perform reciprocating movements and which is received with a nozzle-side end section in a high-pressure chamber (11) of the high-pressure injector part (3),
- a prechamber arrangement (39), within which the high-pressure chamber (11) of the high-pressure injector part (3) is partitioned off by way of a nozzle-side end section in a manner surrounded by the prechamber (17), **characterized in that**
the prechamber arrangement (39) has a multi-wall separating wall (43, 45, 55) for partitioning off the nozzle-side end section of the high-pressure chamber (11) from the prechamber (17) surrounding said high-pressure chamber (11).

2. Fuel injector (1) according to Claim 1,
**characterized in that**
- the prechamber arrangement (39) has at least one sleeve-shaped element (45, 55) for partitioning off the nozzle-side end section of the high-pressure chamber (11) from the prechamber (17) surrounding said high-pressure chamber (11).

3. Fuel injector (1) according to any of the preceding claims,
**characterized in that**
- an element (55) for partitioning off the nozzle-side end section of the high-pressure chamber (11) from the prechamber (17) surrounding said high-pressure chamber (11) is provided as a heat shield.

4. Fuel injector (1) according to any of the preceding claims,
**characterized in that**
- the prechamber arrangement (39) is formed by means of a prechamber body (19) within which the end section of the high-pressure chamber (11) is also partitioned off in a manner surrounded by the prechamber (17).

5. Fuel injector (1) according to Claim 4,
**characterized in that**
- the prechamber body (19) has a separating wall (43) which is formed integrally with said prechamber body (19) and by means of which the end section of the high-pressure chamber (11) is partitioned off in a manner surrounded by the prechamber (17).

6. Fuel injector (1) according to any of the preceding claims,
**characterized in that**
- the prechamber body (19) forms a seat (9) for the nozzle valve member (7); and/or
- the prechamber body (19) has the nozzle arrangement (5) of the high-pressure injector part (3); and/or
- the prechamber body (19) has flow transfer openings (41) of the prechamber (17).

7. Fuel injector (1) according to any of Claims 4 to 6,
**characterized in that**
- the prechamber body (19) is produced by means of an additive manufacturing process.

8. Fuel injector (1) according to Claim 7,
**characterized in that**
- the prechamber (17) has an annular cross section.

9. Fuel injector (1) according to any of the preceding claims,
**characterized in that**
- the fuel injector (1) has an ignition means (31) and/or a low-pressure combustion gas feed device (29) at the prechamber (17).

10. Fuel injector (1) according to any of the preceding claims,
**characterized in that**
- the fuel injector (1) is configured to feed the prechamber (17) with combustion gas that arises as leakage gas at the high-pressure injector part (3).

11. Internal combustion engine,
**characterized by**
- at least one fuel injector (1) according to any of the preceding claims.

## Revendications

1. Injecteur de carburant (1), présentant :
- une préchambre (17) interne à l'injecteur,
- une partie d'injecteur haute pression (3) destinée à une expulsion de gaz combustible et qui présente un agencement de buse (5) ainsi qu'un élément de soupape de buse (7), mobile en levage, qui est reçu par une section d'extrémité côté buse dans une chambre haute pression (11) de la partie d'injecteur haute pression (3),
- un agencement de préchambre (39) dans le cadre duquel la chambre haute pression (11) de la partie d'injecteur haute pression (3) est cloisonnée par l'intermédiaire d'une section d'extrémité côté buse en étant entourée par la préchambre (17),
**caractérisé en ce que** l'agencement de préchambre (39) présente une cloison (43, 45, 55) à plusieurs parois destinée à cloisonner la section d'extrémité côté buse de la chambre haute pression (11) par rapport à la préchambre (17) qui l'entoure.

2. Injecteur de carburant (1) selon la revendication 1, **caractérisé en ce que**
- l'agencement de préchambre (39) présente au moins un élément en forme de douille (45, 55) destiné à cloisonner la section d'extrémité côté buse de la chambre haute pression (11) par rapport à la préchambre (17) qui l'entoure.

3. Injecteur de carburant (1) selon l'une quelconque des revendications précédentes, **caractérisé en ce que**
- un élément (55) destiné à cloisonner la section d'extrémité côté buse de la chambre haute pression (11) par rapport à la préchambre (17) qui l'entoure est prévu sous la forme d'un écran thermique.

4. Injecteur de carburant (1) selon l'une quelconque des revendications précédentes, **caractérisé en ce que**
- l'agencement de préchambre (39) est formé au moyen d'un corps de préchambre (19) à l'intérieur duquel la section d'extrémité de la chambre haute pression (11) est également cloisonnée en étant entourée par la préchambre (17).

5. Injecteur de carburant (1) selon la revendication 4, **caractérisé en ce que**
- le corps de préchambre (19) présente une cloison (43) formée d'un seul tenant avec celui-ci au moyen de laquelle la section d'extrémité de la chambre haute pression (11) est cloisonnée en étant entourée par la préchambre (17).

6. Injecteur de carburant (1) selon l'une quelconque des revendications précédentes, **caractérisé en ce que**
- le corps de préchambre (19) forme un siège (9) pour l'élément de soupape de buse (7) ; et/ou
- le corps de préchambre (19) présente l'agencement de buses (5) de la partie d'injecteur haute pression (3) ; et/ou
- le corps de préchambre (19) présente des ouvertures de trop-plein (41) de la préchambre (17).

7. Injecteur de carburant (1) selon l'une quelconque des revendications 4 à 6, **caractérisé en ce que**
- le corps de préchambre (19) est fabriqué au moyen d'un procédé de fabrication additif.

8. Injecteur de carburant (1) selon la revendication 7, **caractérisé en ce que**
- la préchambre (17) présente une section transversale annulaire.

9. Injecteur de carburant (1) selon l'une quelconque des revendications précédentes, **caractérisé en ce que**
- l'injecteur de carburant (1) présente au niveau de la préchambre (17) un dispositif d'allumage (31) et/ou un dispositif d'alimentation en gaz combustible basse pression (29).

10. Injecteur de carburant (1) selon l'une quelconque des revendications précédentes, **caractérisé en ce que**
- l'injecteur de carburant (1) est aménagé pour alimenter la préchambre (17) au moyen d'un gaz combustible qui est produit sous forme de gaz de fuite au niveau de la partie d'injecteur haute pression (3).

11. Moteur à combustion interne, **caractérisé par**
- au moins un injecteur de carburant (1) selon l'une quelconque des revendications précédentes.
